# EUROPÄISCHE PATENTSCHRIFT

(11) **EP 1 704 073 B1**
(45) Veröffentlichungstag und Bekanntmachung des Hinweises auf die Patenterteilung: **02.04.2008**
(21) Anmeldenummer: 04701909.6
(22) Anmeldetag: 14.01.2004
(51) Int. Cl.: B60R 16/02

(54) **ÜBERTRAGUNG MINDESTENS EINER PERSONENBEZOGENEN EINSTELLUNG EINES FAHRZEUGS**
TRANSFER OF AT LEAST ONE PERSONAL VEHICLE SETTING
TRANSFERT D'AU MOINS UN REGLAGE, RELATIF AUX PERSONNES, D'UN VEHICULE

(43) Veröffentlichungstag der Anmeldung: 27.09.2006
(73) Patentinhaber: Bayerische Motoren Werke Aktiengesellschaft, 80809 München (DE)
(72) Erfinder: HEIDER, Andreas, 80634 München (DE); STAUNER, Thomas, 85716 Unterschleissheim (DE); SAAD, Alexandre, 85386 Eching (DE); SCHRÖDER, Astrid, 80799 München (DE)
(74) Vertreter: Grüter, Klaus Peter
(86) Internationale Anmeldenummer: PCT/EP2004/000187
(87) Internationale Veröffentlichungsnummer: WO 2005/068259

(56) Entgegenhaltungen:
- EP-A- 0 635 800
- EP-A- 1 138 561
- DE-A- 10 039 756
- DE-A- 19 840 955
- US-A1- 2003 171 863

## Beschreibung

Die Erfindung betrifft ein Verfahren, ein System und ein Computer-Programm-Produkt zur Übertragung mindestens einer ersten personenbezogenen Einstellung eines ersten Fahrzeugs in ein zweites Fahrzeug, insbesondere für einen Fahrer, der das Fahrzeug wechselt, nach dem Oberbegriff des betreffenden unabhängigen Anspruchs.

Bekannt ist die Sicherung von Personalisierungsdaten durch ein externes Diagnosegerät in der Werkstatt, das die Daten aus dem Steuergerät eines Fahrzeugs ausliest und diese Daten in ein neu eingebautes Steuergerät oder in das mit aktualisierter Software versehene Steuergerät einbringt. Eine Konvertierung der Daten findet nicht statt.

"Unterschiedlich" sind zwei Steuergeräte dann, wenn sie nicht die gleiche Menge an Personalisierungsdaten (d.h. unterschiedlich viele Einstellmöglichkeiten) aufweisen oder die Steuergeräte gleiche Daten unterschiedlich interpretieren. In der Regel sind Steuergeräte mit unterschiedlichen Teilenummern beispielsweise als unterschiedlich zu betrachten. Vertraulichkeit der Daten oder Sicherheits-Maßnahmen gegen einen missbräuchlichen Datenaustausch ist bzw. sind ebenfalls nicht vorgesehen. Die heutige Sicherheit basiert darauf, dass der Zugriff auf Fahrzeug und Diagnosegerät nicht für beliebige Personen möglich ist.

Aus der US2003/171863 A1, die die Merkmale des Oberbegriffs des Anspruchs 1 zeigt, ist ein Verfahren zur benutzerspezifischen Einstellung eines Kraftfahrzeugs bekannt. Benutzerspezifische Daten werden auf einem externen Speichermedium abgespeichert und die Einstellung des Fahrzeugs erfolgt anhand dieser Daten. Bei den Daten handelt es sich um fahrzeugunabhängige Referenzwerte.

Die Aufgabe der Erfindung besteht insbesondere in der Angabe eines Verfahrens, bei dem die dem Fahrer aus einem ersten Fahrzeug bekannten Fahrzeug-Einstellungen möglichst originalgetreu in ein zweites Fahrzeug übertragen werden.

Diese Aufgabe wird durch die Merkmale der unabhängigen Ansprüche gelöst. Vorteilhafte Ausgestaltungen sind Gegenstand der abhängigen Patentansprüche.

Gemäß eines ersten wichtigen Aspekts der Erfindung werden die die personenbezogene erste Einstellung angebenden ersten Personalisierungsdaten in einem ersten Schritt aus dem ersten Fahrzeug in modifizierter oder ursprünglicher Form exportiert. In einem zweiten Schritt werden die Daten in ein zweites Fahrzeug importiert und auf der Basis der importierten Daten werden zweite Personalisierungsdaten gebildet anhand der eine personenbezogene Einstellung im zweiten Fahrzeug vorgenommen wird.

Hieran ist von Vorteil, dass der Typ und/oder die Ausstattung des ersten und des zweiten Fahrzeugs identisch oder aber auch unterschiedlich sein kann.

Gemäß eines zweiten wichtigen Aspekts der Erfindung ist vorgesehen, dass die ersten Personalisierungsdaten aus dem ersten Fahrzeug in einer Form exportiert werden, die den Typ des ersten Fahrzeugs erkennen lässt und im zweiten Fahrzeug unter Verwendung dieser Daten die personenbezogenen Einstellungen vorgenommen werden.

Dies ermöglicht in vorteilhafter, flexibler Weise die Anpassung der die Einstellung im Quellfahrzeug bzw. im ersten Fahrzeug angebenden Daten in Daten, die im Zielfahrzeug eine Einstellung hervorrufen, die weitgehend originalgetreu ist bzw. beim Wechsel des Fahrzeugs einer Einstellung entspricht, die der Fahrer oder die Mitfahrer typischerweise erwarten.

Gemäß eines dritten wichtigen Aspekts der Erfindung ist vorgesehen, dass dass die in ursprünglicher oder modifizierter Form aus dem ersten Fahrzeug exportierten Personalisierungsdaten und/oder die in ein Fahrzeug unabhängiges Datenformat konvertierten ersten Personalisierungsdaten und/oder die ersten Personalisierungsdaten, die eine Form aufweisen, dass sie den Typ des ersten Fahrzeugs erkennen lassen, verschlüsselt und/oder signiert werden, wobei vorzugsweise eine Verschlüsselung und Signatur mit einem Public-Key-Verfahren durchgeführt wird.

Durch diese Maßnahmen kann sowohl die Vertraulichkeit der Personalisierungsdaten als auch deren Unverfälschtheit sichergestellt werden. Vertrauliche Personalisierungsdaten können bspw. Namen, Telefonnummern und Adressen einer Telefon- oder Adress-Anwendung bzw. - Software sein.

Der Begriff Personalisierungsdaten umfasst die Daten für Einstellungen im Fahrzeug, die von oder für eine Person, die dieses Fahrzeug nutzt, gemacht werden können. Beispiele sind Sitzeinstellung, Radiolautstärke, Navigationsziellisten und Einstellungen von Alarmanlage und Entriegelung sowie heutige CKM (Car-Key-Memory) Daten. Personalisierungsdaten können darüber hinaus auch Regeln sein, die zum Setzen von Einstellungen oder zur Beeinflussung von Fahrzeugfunktionen verwendet werden ("aktive Daten"). Beispiel ist eine Regel die maschinell auswertbar formalisiert, dass das Fahrzeug das Abblendlicht einschaltet, sobald die Geschwindigkeit 100 km/h übersteigt. Ferner können Personalisierungsdaten auch im Fahrzeug ausführbare Programme sein, z.B. in Form von maschinenunabhängigem Java-Bytecode. Auch personenbezogene, in Software realisierte Dienste, wie eine automatische Sitzeinstellfunktion, fallen hierunter.

Nach einer vorteilhaften Ausgestaltung der Erfindung ist vorgesehen, dass die ersten Personalisierungsdaten in ein fahrzeugunabhängiges Datenformat konvertiert werden und im zweiten Fahrzeug unter Verwendung der Daten im fahrzeugunabhängigen Datenformat die personenbezogenen Einstellungen vorgenommen werden.

Alternativ oder ergänzend ist bei einer bevorzugten Ausgestaltung der Erfindung vorgesehen, dass die ersten Personalisierungsdaten von mindestens einem ersten Steuergerät des ersten Fahrzeugs und/oder von einer im ersten Fahrzeug vorgesehenen ersten zentralen Datenbank vor deren Export abgerufen und die zweiten Personalisierungsdaten, die auf der Basis der ersten Personalisierungsdaten gebildet worden sind, mindestens einem zweiten Steuergerät des zweiten Fahrzeugs und/oder einer im zweiten Fahrzeug vorgesehenen zweiten zentralen Datenbank zugeführt werden bzw. wird.

Eine weitere vorteilhafte Ausgestaltung der Erfindung zeichnet sich dadurch aus, dass die zweiten Personalisierungsdaten aus den ersten Personalisierungsdaten unter Verwendung einer Tabelle, einer Matrix oder einer anderen Zuordnungsvorschrift gebildet werden, insbesondere eine Tabelle, die die ggf. unterschiedlichen Fahrzeugtypen berücksichtigt.

Bei einer anderen Ausgestaltung der Erfindung ist vorgesehen, dass die ersten Personalisierungsdaten mit weiteren Personalisierungsdaten zu einer Gruppe zusammengefasst und gemeinsam verschlüsselt und/oder signiert werden.

Nachfolgend wird im Detail der erfindungsgemäße Export- und der Import-Algorithmus, das Konvertierungs- und das Datenschutzverfahren, die Portierung, die Datensicherheit, der Datentransfer und die Vorteile der Erfindung anhand von Ausführungsbeispielen näher beschrieben.

Zusammenfassend wird erfindungsgemäß ein Verfahren vorgeschlagen, das bevorzugt Personalisierungsdaten im Fahrzeug abruft, von einem intern im Fahrzeug benutzten fahrzeugabhängigen Datenformat in ein portierbares, fahrzeugunabhängiges Format umwandelt und entsprechend der Sicherheitsrelevanz der Daten ihren Schutz sicherstellt. Ebenso kann das Verfahren Daten in diesem geschützten Externformat wieder in das fahrzeugabhängige, interne Format eines anderen Fahrzeugs umwandeln und diesem Fahrzeug zur Verfügung stellen. Die Umwandlung erfolgt bevorzugt dabei so, dass die Daten dabei in einer Art auf das Zielfahrzeug angepasst werden, die der Einstellung im Quellfahrzeug möglichst originalgetreu entsprechen.

Der Exportalgorithmus weist die folgenden Schritte auf:
1. Abruf der Daten von den Steuergeräten oder von einer zentralen Datenbank im Fahrzeug
2. Konvertierung auf ein Externformat oder durch eine Tabelle im Zielfahrzeug und Kennzeichnung bzw. Attributierung der Daten mit einer Information zur weiteren Behandlung beim Import
3. ggf. Verschlüsselung und Signatur der Daten, abhängig vom Übertragungsweg und von den Schutzanforderungen der betreffenden Daten; vor der Verschlüsselung kann auch eine Gruppierung der Daten, z.B. nach dem Grad der Sicherheitsanforderungen erfolgen
4. Schreiben auf einen Datenträger bzw. Übergabe auf den Übertragungsweg

Der Importalgorithmus hat die folgenden Schritte:
1. Lesen vom Datenträger (im Fall einer direkten Online-Verbindung zwischen Quell- und Zielfahrzeug als "Medium", fällt das Schreiben beim Zielfahrzeug und Lesen beim Quellfahrzeug zusammen)
2. ggf. Authentisierung, Entschlüsselung und Signaturprüfung
3. Konvertierung auf ein Internformat oder Konvertierung durch Tabelle
4. Übermittlung der Daten an die Steuergeräte bzw. auf eine zentrale Datenbank im Fahrzeug, die die Einstellungen an die Steuergeräte propagiert (Ggf. werden einige Daten von der Datenbank nicht weiter an Steuergeräte propagiert. Das trifft zu, wenn kein entsprechendes Steuergerät vorhanden ist, die Daten aber für zukünftigen Export erhalten bleiben sollen. Näheres siehe unten.)

Im Folgenden wird ein bevorzugtes Konvertierungs- und Datenschutzverfahren der vorgenannten Schritte 2 und 3 durch Pseudo-Code näher beschrieben:
Ausgangpunkt ist eine Liste *internal-list* der im Fahrzeug gespeicherten Personalisierungsdaten, eine Funktion *internal,* die zu jedem Listenelement den zugehörigen Wert *value,* zugehörige Import- und Export-Konvertierungsfünktionen *exp-konv* (im Quellfahrzeug) und *imp-konv* (im Zielfahrzeug), Funktionen zur Sicherstellung der Datensicherheit beim Import- und Export *exp-secure* (im Quellfahrzeug) und *imp-secure* (im Zielfahrzeug) angibt. Die Funktionen zur Sicherstellung der Datensicherheit erfordern - abhängig vom Algorithmus - weitere Parameter, wie Schlüssel und Passwörter, die im folgenden Code nicht wiedergegeben sind.

Der Daten-Export in Pseudo-Code: 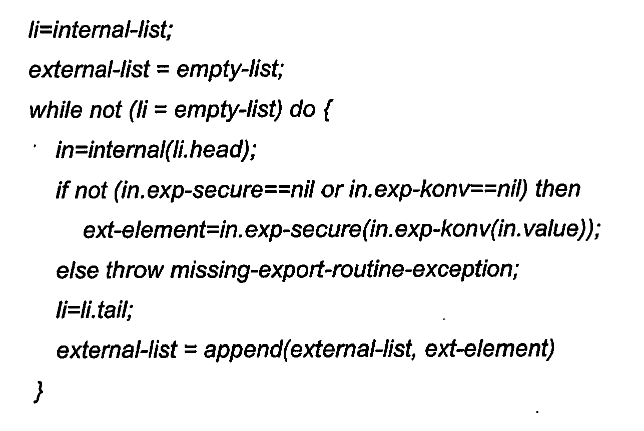 *head, tail, empty-list* und *append* bezeichnen dabei die üblichen Listenoperationen: erstes Element der Liste, Liste ohne erstes Element, leere Liste und Anhängen eines Elements an eine Liste.

Die Liste *external-list* wird durch den Algorithmus definiert und enthält alle ggf. durch Datenschutzmechanismen gesicherten und im Exportformat codierten Personalisierungsdaten. Sie kann in beliebiger (aber zwischen allen Fahrzeugen einheitlicher) Codierung (XML, TLV, ...) auf den Datenträger geschrieben werden.

Daten, für die keine spezifischen Konvertierungsfunktionen bereitstehen, werden unverändert exportiert. Näheres wird nachfolgend noch beschrieben.

Der Daten-Import im Pseudo-Code:

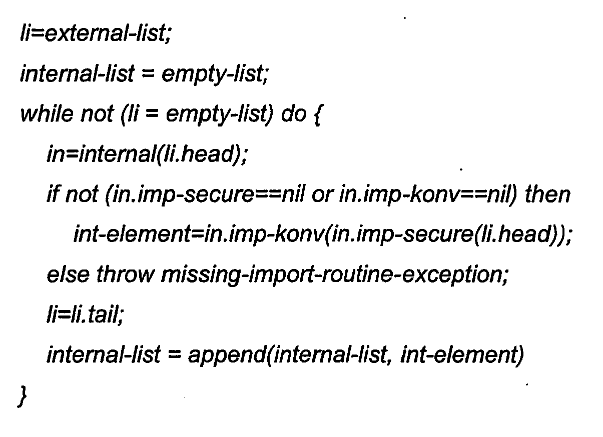

Die Liste *internal-list* wird durch den Algorithmus um die Daten im Internformat des Zielfahrzeugs ergänzt (vgl. *in.value* im Export-Algorithmus).

Die tatsächlich angewendeten Datenschutzverfahren und Konvertierungen können von den konkreten Daten abhängen und die Verfahren damit selbstverständlich auch von den dargestellten Ausführungsbeispielen abweichen.

Alternativ können einzelne auf das Zielfahrzeug zu übertragene Einstellungen zu Gruppen zusammengefasst werden. Im Code kann das dadurch erreicht werden, dass die while-Schleife in zwei getrennte Schleifen, eine zur Konvertierung und eine für Sicherheitsfunktionen, aufgebrochen wird. Zwischen beiden Schleifen kann dann eine Umsortierung der Liste mit einer Zusammenfassung von Elementen erfolgen (z.B. nach Sicherheitsanforderungen). Funktion *internal* muss dann ebenfalls in zwei Funktionen aufgebrochen werden, eine, die die Konvertierungsfunktion für Listenelemente angibt und eine, die Sicherheitsfunktionen für Listenelemente angibt.

Diese Alternative ermöglicht es, die Datensicherheitsmechanismen nicht spezifisch für jedes Datum zu machen, sondern einheitliche Mechanismen für Gruppen von Daten vorzusehen. Der Übersichtlichkeit halber wurde diese Möglichkeit im Code nicht dargestellt.

Durch die Nutzung von Listen ist eine Erweiterbarkeit um neue Personalisierungsdaten gegeben. Listenelemente können auch hierarchisch aufgebaut sein.

Nochfolgend eine Anmerkung zum besseren Verständnis. Für eine einfacher verständliche, aber schlecht erweiterbare Implementierung mit Arrays anstelle von Funktion *internal* und einer festen Zahl von durchnumerieren Elementen anstelle von Listen, würde eine Implementierung folgendermaßen aussehen:
für den Daten-Export:
*for i=0 to n do external-array[i]=exp-secure[i](exp-konv[i](internal-array[i]));*
für den Daten-Import:
*for i=0 to n do internal-array[i]=imp-konv[i](imp-secure[i](external-array[i]));*

Im Folgenden wird die Portierung durch Ausführungsbeispiele näher beschrieben und zwar zunächst im Rahmen einer ersten Alternative in Form eines kontextunabhängigen Austauschformats und dann im Rahmen einer zweiten Alternative in Form eines Austauschformats mit Kontextinformation.

### Alternative 1: kontextunabhängiges Austauschformat

Eine Möglichkeit zur Übertragung der Personalisierungsdaten besteht in der Konvertierung der Einstell-Werte aus dem fahrzeug- oder steuergeräte-spezifischen Format des Quell- bzw. Export-Fahrzeugs in ein fahrzeugunabhängiges Format, mit anschließender weiterer Konvertierung vom fahrzeugunabhängigen Format in das fahrzeugabhängige Format des Ziel- bzw. Import-Fahrzeugs beim Import. Im Rahmen dieses Ausführungsbeispiels wird vorgeschlagen, folgendermaßen vorzugehen.

### Portierungsalgorithmus beim Export (Funktion exp-konv):

Folgende Fälle sind zu unterscheiden:

### 1. Reelwertiges Datum ist nicht im SI-Format:

Falls der Einstellwert einen Wertebereich hat, der eine Teilmenge der reellen Zahlen ist und nicht in einer Einheit gemessen wird, die in ein SI-Format (internationales Standardformat) gemappt bzw. umgerechnet werden kann, muss der Wert in ein passendes Austauschformat umgerechnet werden, das für jedes Personalisierungsdatum spezifisch festzulegen ist.

Eine Möglichkeit hierfür ist die Umrechnung in eine allgemeingültige (= für alle Fahrzeuge gültige) Exporteinheit. Beispiel: "Umdrehungen Stellmotor Sitz" umgerechnet in "Abstand Sitz zum Lenkrad".

Eine weitere Möglichkeit der Umrechnung in ein Austauschformat ist, aus dem absoluten Einstellwert *abs* einen Relativwert *rel* zu bilden: *rel* = *(abs*100)* /*(y-x),* wobei das Intervall *[x...y]* den Wertebereich des Einstellwerts darstellt. Diese Möglichkeit ist anwendbar, wenn die Wertebereiche des Quell- und des Zielfahrzeugs den gleichen Abstandsbegriff haben, z.B. dann wenn beide linear oder beide logarithmisch sind. Diese Konvertierung unterstützt die Transformation zwischen Wertebereichen mit unterschiedlicher diskreter Rasterung. Die Information über den Abstandsbegriff des Quellfahrzeugs, z.B. logarithmisch oder linear ist hier mit zu exportieren, ebenso die Information über die Ausdehnung des Wertebereichs. Diese Informationen sind beim Import entsprechend auszuwerten.

Der Wert wird dann jeweils sowohl im Originalformat als auch im Austauschformat dem Portierungsprofil hinzugefügt.

### 2. Reelwertiges Datum ist im SI-Format:

Falls der Einstellwert einen Wertebereich hat, der eine Teilmenge der reellen Zahlen ist, und in einer Einheit ist, die in ein SI-Format gemappt werden kann, wird der Einstellwert in das SI-Format umgerechnet, bevor der Einstellwert oder die Einstellwerte exportiert werden. In diesem Fall stellt also das SI-Format das Austauschformat dar.

Anzumerken zu 1. und 2. ist, dass es auch Einstellwerte geben kann, deren Wertebereich aus n-Tupeln besteht, deren Komponenten reelle Zahlen sind. Es sei *n* eine natürliche Zahl. Dann hat ein n-Tupel *n* sogenannte *Komponenten.* Jede Komponente ist ein bestimmter Wert. Beispielsweise hat ein 3-Tupel 3 Komponenten: die Komponente 0, die Komponente 1 und die Komponente 2. In diesem Fall sind die durch die n-Tupel dargestellten Werte ebenfalls in ein passendes Austauschformat (z.B. ein existierendes Standardformat) umzuwandeln, bevor sie exportiert werden. Auch hier sind die Werte sowohl im Originalformat als auch im Austauschformat dem Portierungsprofil hinzuzufügen.

Anmerkung zu 1. und 2.: Ein Einstellwert mit einem Wertebereich, der eine Teilmenge der reellen Zahlen ist (oder dessen Wertebereich aus n-Tupeln besteht, deren Komponenten reelle Zahlen sind), wird mit "real" bezeichnet; das Attribut Portierungstyp im Datenformat ist auf real zu setzen.

### 3. Datum ist nicht reelwertig:

Für alle anderen Einstellwerte ist der Wert unverändert zu exportieren, d.h. dem Portierungsprofil hinzuzufügen. Das Attribut *portierungstyp* ist auf *non-real* zu setzen.

### 4. Personalisierungsdaten aus vorherigen Importvorgängen:

Weitere Personalisierungsdaten, die im Exportfahrzeug persistent gespeichert, aber nicht benutzt worden sind (Wert *save* von Attribut *import-persistance* beim vorhergehenden Import, siehe unten) werden unverändert, d.h. mit allen ihren unveränderten Attributen exportiert.

### 5. Weitere Personalisierungsdaten:

Wie oben angesprochen, können neben Einstellwerten auch weitere personalisierte Daten portiert werden, wie
a) persönliche Daten wie z.B. Adressen, Termine, Musikstücke
b) persönlich zugeordnete Software (Applikationen/Dienste wie Word oder auch Steuergeräte-Software, die z.B. als Sonderausstattung vom Kunden in einer besonders hochwertigen Version gekauft wurde)
c) Berechtigungen, insbesondere hinsichtlich Nutzungsumfang, Nutzungsdauer, Nutzungshäufigkeit, und Nutzungsübertragbarkeit, eine Software zu nutzen, die z.B. schon im Fahrzeug vorhanden sein kann und mit der Portierung freigeschaltet wird oder aber aufgrund der Berechtigung von einem Server geladen werden kann.

Diese personalisierten Daten werden unverändert dem Portierungsprofil hinzugefügt. Im Fall a) kann auch eine Konvertierung in ein passendes Austauschformat erfolgen, z.B. in ein existierendes Standardformat. D.h. ein Format, das von mehreren Applikationen, die Daten des Typs a) verarbeiten können, unterstützt wird.

### 6. Regeln als Personalisierungsdaten

Eine dynamische Form von Personalisierungen kann durch Regeln erreicht werden. Eine Regel kann z.B. in folgender Notation erfasst werden:
*IF <Bedingung = TRUE> THEN <Aktionsliste>*
<Bedingung> ist ein Boolescher Ausdruck, der (aggregierte) Daten und Metadaten des Fahrzeugs, der Fahrzeugumgebung oder des Fahrers umfassen kann.
<Aktionliste> ist eine Liste von beliebigen Fahrzeug-Funktionen, die ausgeführt wird, sobald die Bedingung erfüllt ist. Abhängigkeiten zwischen Regeln sind ebenfalls möglich.

### Beispiele:

IF (Geschwindigkeit >= 100 km/h) THEN ChangeDisplayMode ()
IF (Urlaubsfahrt = TRUE) THEN DisableBusinessNumbers ()
IF (Fahrer müde AND Temperatur im Auto > 20 Grad) THEN SetAirCondition (On, 15 Grad, Max); Radio (On, Loud)

Die Regeln können attributiert und exportiert werden. Beim Import muss überprüft werden, ob Regeln prinzipiell im Zielfahrzeug ausgewertet werden können. Falls nein, kann ein *discard* oder *save* erfolgen. Falls Regeln interpretiert werden können, ist zu prüfen, ob die Werte in der Bedingung im Zielfahrzeug vorhanden sind und ob die Funktionen der Funktionsliste vorhanden sind und sich mit den Parametern ausführen lassen. Falls ja, können diese Regeln im Zielfahrzeug angewendet werden. Falls nein, sind Abhängigkeiten zu anderen Regeln zu prüfen. Hier kann ebenfalls ein *discard* oder *save* erfolgen.

Regeln stellen ein mächtiges Konzept zur dynamischen Personalisierung dar und sind vergleichsweise einfach zu exportieren und in ein Zielfahrzeug zu übertragen.

### Weitere Attribute der exportierten Personalisierungsdaten:

Neben dem eigentlichen Personalisierungsdatum legt die Funktion *exp-konv* auch den Wert für das Attribut *import-persistance* mit ab, das zu jedem Personalisierungsdatum gehört. Der Wert *save* dieses Attributs gibt an, dass das Datum persistent gespeichert werden soll (z.B. in einem Filesystem oder einer Datenbank), wenn die zugehörige Fahrzeugfunktion im Zielfahrzeug nicht vorhanden ist. Dadurch wird es möglich, Personalisierungsdaten auch über Fahrzeuge hinweg zu übertragen, die nicht alle möglichen Personalisierungsdaten unterstützen. Der Wert *discard* für das Attribut gibt an, dass das Personalisierungsdatum im Zielfahrzeug verworfen und nicht zum Re-Export gespeichert wird, falls die zugehörige Fahrzeugfunktion nicht im Zielfahrzeug vorhanden ist.

Anmerkung: Eine sinnvolle Voreinstellung für das Attribut *import-persistance* ist, allen Einstellwerten *discard* zuzuordnen. Allein den oben unter a), b) und c) beschriebenen Daten wird *save* zugeordnet.

Ein weiteres Attribut, *import-compatibility,* das *exp-konv* zu dem Personalisierungsdatum ablegt, regelt die Behandlung des Datums für den Fall, dass im Importfahrzeug eine veränderte Version der personalisierten Einstellung vorliegt, d.h., dass z.B. der exportierte Wert außerhalb des Wertebereichs des Importfahrzeugs für das betreffende Datum liegt. Das Attribut kann folgende drei Werte annehmen: *autoAnpassen(tol), Anfrage* und *keine Aktion* (im Folgenden erklärt).

autoAnpassen(tol): Ist ein importierter Wert nicht im Wertebereich des Zielfahrzeugs enthalten, so wird im Falle eines Wertebereichs, der eine Teilmenge der reellen Zahlen ist, der nächstgelegene Wert, d.h. nächster definierter Nachbar - in dem Falle, dass es mehrere gibt, wird einer ausgewählt, gesetzt, falls dieser sich nicht weiter als *tol* Einheiten vom eigentlich zu setzenden Wert unterscheidet. Unterscheidet er sich stärker, wird eine Anfrage durchgeführt.

*Anfrage:* Liegt ein Wert nicht im Wertebereich, so werden dem Nutzer im Falle eines Wertebereichs mit definiertem Abstandsbegriff der nächstgelegene Wert - ansonsten sämtliche zur Auswahl stehende Werte - angezeigt. Ein Wertebereich ohne Abstandsbegriff wäre etwa der Wertebereich für die Alarmanlageneinstellung. Werte wären hier etwa an, aus, und nachts automatisch an.
*keine Aktion:* Es wird nichts getan.

Anmerkung: Eine sinnvolle Voreinstellung für das Attribut *import-compatibility* ist, allen Einstellwerten, die vom Typ *non-real* sind, Anfrage zuzuordnen. Einstellwerten vom Typ *real* wird *autoAnpassen(tol)* zugeordnet, wo jeweils passende Werte für *tol* festzulegen sind. Weiteren Personalisierungsdaten, wie oben unter a), b) und c) beschrieben, wird *autoAnpassen*(*tol*) zugeordnet (siehe auch unten).

Zusammenfassend sind damit folgende Attribute mit einem exportierten Personalisierungsdatum verknüpft:
Portierungstyp (Werte: *real, non-real*), *import-persistance* (Werte: *save, discard*), import-compatibility (Werte: *autoAnpassen*(*tol*), *Anfrage, keine Aktion).*

### Portierungsalgorithmus beim Import (Funktion imp-konv):

Falls die Fahrzeugfunktion, zu der das Personalisierungsdatum gehört, im Zielfahrzeug nicht vorhanden ist, wird diejenige Behandlung durchgeführt, die im Attribut *import-persistenz* angegeben ist, d.h. persistente Speicherung oder Verwerfen.

Ist die Fahrzeugfunktion, zu der das Personalisierungsdatum gehört, im Zielfahrzeug vorhanden, wird folgendermaßen vorgegangen:

### 1. Reelwertiges Datum ist nicht im SI-Format:

Bei einem Einstellwert vom Typ *real,* der nicht in einer SI-Einheit abgelegt war, wird der Originalwert gewählt, falls es sich im Zielfahrzeug um die gleiche Version (insbesondere auch gleicher Wertebereich) der Fahrzeugfunktion handelt. Ansonsten wird das Austauschformat in das im Zielfahrzeug gültige Format umgerechnet, bevor der Wert gesetzt wird. Falls hierbei zu einem Wert Informationen über den Abstandsbegriff vorliegen, ist zu prüfen, ob diese mit dem Abstandsbegriff im Zielfahrzeug kompatibel sind. D.h. es ist zu prüfen, ob es sich um den gleichen Abstandsbegriff handelt. Handelt es sich nicht um den gleichen Abstandsbegriff, werden die Werte nicht gesetzt; es findet keine weitere Aktion statt.

### 2. Reelwertiges Datum ist im SI-Format:

Einstelldaten vom Typ *real,* die in einer SI-Einheit abgelegt waren, werden in die im Zielfahrzeug geltende Einheit umgerechnet, bevor sie gesetzt werden.

### 3. Datum ist nicht reelwertig:

Für alle anderen Einstellwerte (Portierungstyp *non-real)* wird der im Portierungsprofil übertragene Wert unverändert übernommen.

Kann (egal in welchem der drei obigen Fälle) der Wert nicht übernommen werden, da der portierte Wert nicht einem gültigen Wert des Wertebereichs entspricht (andere Version der Fahrzeugfunktion im Zielfahrzeug), so ist diejenige Ausnahmebehandlung durchzuführen, die im Attribut *import-compatibility* angegeben ist (siehe oben).

Aus Gründen der Benutzbarkeit kann, falls die Zahl der Rückfragen motiviert durch Attributwert Anfrage für *import-compatibility,* einen bestimmten Wert übersteigt der Import dieser Werte entfallen. In diesem Fall werden nur die übrigen Werte gesetzt und es wird eine Meldung der Art ausgegeben ("Import nicht von allen Werten möglich, Fahrzeugkonfiguration zu unterschiedlich").

### 4. Weitere Personalisierungsdaten:

Bei weiteren Personalisierungsdaten, d.h. solche, die keine reinen Einstellwerte sind, die portiert wurden, wie
a) persönliche Daten wie z.B. Adressen, Termine, Musikstücke
b) persönlich zugeordnete Software
c) Berechtigungen, eine Software zu nutzen
wird beim Import geprüft, ob
a) eine Softwareapplikation im Fahrzeug vorhanden ist, die die Daten verarbeiten kann (z.B. Outlook). Dies entspricht der Prüfung des Vorhandenseins einer Fahrzeugfunktion im Fall der Portierung eines Einstellwerts. Im positiven Fall werden die Daten an die entsprechende Softwareapplikation weitergeleitet. Dies entspricht dem Setzen bzw. der Übernahme eines Einstellwerts. Im negativen Fall wird geprüft, ob eine Softwareapplikation vorhanden ist, die die Daten in einem Format verarbeiten kann, das zu dem Format, in dem die Daten vorliegen, kompatibel ist. In diesem Fall wird die Behandlung durchgeführt, die zum Attribut *import-incompatibility* beschrieben worden ist, wobei *autoAnpassen(tol)* in diesem Fall bedeutet, dass die Daten in ein von der vorhandenen Applikation unterstütztes Format konvertiert werden, bevor sie an die entsprechende Applikation weitergeleitet werden (*tol* ist in diesem Fall zu ignorieren).
   Alternativ können die Daten auch bereits beim Export in ein Standardformat umgewandelt werden, dass von mehreren Applikationen unterstützt wird, falls ein solches existiert. Ist keinerlei Applikation vorhanden, die die Daten verarbeiten kann, oder kann eine Konvertierung nicht durchgeführt werden, z.B. weil kein passender Konverter vorhanden ist, wird die Behandlung durchgeführt, die zum Attribut *import-persistenz* angegeben ist.
b) die importierte Software systemverträglich ist, d.h. ob sie mit der Konfiguration im Zielfahrzeug kompatibel ist. Beispielsweise wird geprüft, ob eine geeignete Hardware und/oder ein geeignetes Betriebssystem vorhanden ist. Dies entspricht der Prüfung des Vorhandenseins einer Fahrzeugfunktion im Fall der Portierung eines Einstellwerts. Im positiven Fall wird die Software an das entsprechende Steuergerät oder dergleichen weitergeleitet und installiert. Dies entspricht dem Setzen bzw. dem Übernehmen eines Einstellwerts. Ist die importierte Software mit der Konfiguration im Zielfahrzeug nicht direkt kompatibel, weil z.B. zwar das Steuergerät vorhanden ist, jedoch die Software nicht für den Controller oder das Betriebssystem des Steuergeräts angepasst ist, so wird die Behandlung durchgeführt, die zum Attribut *import-incompatibility* angegeben ist. *autoAnpassen(tol)* bedeutet in diesem Fall, dass eine passende Version der Software, passend z.B. für die vorhandene Hardware und/oder das vorhandene Betriebssystem geladen wird, z.B. von einem Server; *tol* ist in diesem Fall zu ignorieren. Diese Version wird dann an das entsprechende Steuergerät weitergeleitet und installiert. Ist die Software mit der Konfiguration im Zielfahrzeug gar nicht kompatibel, weil z.B. kein passendes Steuergerät im Zielfahrzeug vorhanden ist oder kann keine passende Softwareversion geladen werden, so ist die Behandlung durchzuführen, die zum Attribut *import-persistenz* angegeben ist.
c) eine Softwareapplikation im Fahrzeug vorhanden ist, die die Berechtigungen verarbeiten kann, z.B. ein sogenannter Fahrzeug-Securitymanager. Dies entspricht der Prüfung des Vorhandenseins einer Fahrzeugfunktion im Fall der Portierung eines Einstellwerts. Im positiven Fall werden die Daten an die entsprechende Softwareapplikation weitergeleitet. Dies entspricht dem Setzen bzw. dem Übernehmen eines Einstellwerts. Ist keinerlei Applikation vorhanden, die die Daten verarbeiten kann, wird die Behandlung durchgeführt, die zum Attribut *import-persistenz* angegeben ist. Ist eine Applikation vorhanden, die ein Berechtigungsformat verarbeiten kann, in die das importierte Berechtigungsformat umgewandelt werden kann, so wird analog wie bei der Behandlung der Import-Inkompatibilität im Fall a) vorgegangen.

### 5. Regeln als Personalisierungsdaten:

Eine dynamische Form von Personalisierungen kann durch Regeln erreicht werden. Eine Regel kann z.B. in folgender Notation erfasst werden:
*IF <Bedingung = TRUE> THEN <Aktionsliste>*
<Bedingung> ist ein Boolescher Ausdruck, der (aggregierte) Daten und Metadaten des Fahrzeugs, der Fahrzeugumgebung oder des Fahrers umfassen kann.
<Aktionliste> ist eine Liste von beliebigen Fahrzeug-Funktionen, die ausgeführt wird, sobald die Bedingung erfüllt ist. Abhängigkeiten zwischen Regeln sind ebenfalls möglich.

### Beispiele:

IF (Geschwindigkeit >= 100 km/h) THEN ChangeDisplayMode ()
IF (Urlaubsfahrt = TRUE) THEN DisableBusinessNumbers ()
IF (Fahrer müde AND Temperatur im Auto > 20 Grad) THEN SetAirCondition (On, 15 Grad, Max); Radio (On, Loud)

Die Regeln können attributiert und exportiert werden, wie die oben unter Punkt a) angesprochenen weiteren Personalisierungsdaten. Beim Import muss überprüft werden, ob Regeln prinzipiell im Zielfahrzeug ausgewertet werden können. Falls nein, kann ein *discard* oder *save* erfolgen. Falls Regeln interpretiert werden können, ist zu prüfen, ob die Werte in der Bedingung im Zielfahrzeug vorhanden sind und ob die Funktionen der Funktionsliste vorhanden sind und sich mit den Parametern ausführen lassen. Falls ja, können diese Regeln im Zielfahrzeug angewendet werden. Falls nein, sind Abhängigkeiten zu anderen Regeln zu prüfen. Hier kann ebenfalls ein *discard* oder *save* erfolgen.

Regeln stellen ein mächtiges Konzept zur dynamischen Personalisierung dar und sind vergleichsweise einfach zu exportieren und in ein Zielfahrzeug zu übertragen. Das Problem des Import-Mismatch stellt sich ähnlich wie bei den Einstellwerten und kann wie beim Import beschrieben behandelt werden.

Alternative 2 zu Alternative 1 (kontextunabhängiges Austauschformat): Austauschformat mit Kontextinformation

Alternativ zur obigen kontextneutralen Abbildung von Einstellwerten besteht auch die Möglichkeit, eine Abbildungstabelle über Funktionen und Kontext (Fahrzeugtyp bzw. Steuergerät, etc.) zu nutzen, die die Einstellwerte enthält. Z.B. kann eine vergleichbare Sitzposition über Fahrzeugtypen hinweg definiert werden oder eine vergleichbare Lautstärke über verschiedene Audioanlagen hinweg. Abhängig vom Wertetyp des Einstellwertes, können mehrere Vergleichswerte (z.B. Sitzpositionen, Lautstärken, etc.) in der Tabelle hinterlegt sein, um eine Interpolation zu ermöglichen. Diese Abbildungstabelle enthält die Obermenge aller Funktionen, die in einem beliebig ausgestatteten Fahrzeug personalisiert werden können und ist mit der dazugehörigen Kontextinformation versehen. Diese Abbildungstabelle wird ggf. um neue Funktionen oder neuen Kontext erweitert und durch den Automobilhersteller gepflegt.

Die Abbildungstabelle wird folgendermaßen für den Export und Import genutzt: In Bezug auf die *exp-konv* Funktion werden neben den Einstellwerten die relevanten Kontextinformationen mit exportiert. Danach kann entweder extern ein "Table-Lookup" in der Abbildungstabelle erfolgen, falls die Kontextinformation des Zielfahrzeugs vorliegt, um die Einstellwerte im Zielfahrzeug zu beschreiben, oder dies erfolgt im Zielfahrzeug selber. Dazu muss eine aktuelle Abbildungstabelle beim Vorgang *imp-konv* mit ins Fahrzeug übergeben werden. Im einfachsten Fall hat eine Funktion den gleichen Kontext und der Einstellwert kann direkt übernommen werden. Ansonsten (*import-mismatch*) ist der neue Einstellwert durch *Table-Lookup* zu identifizieren bzw. zu interpolieren. Alle anderen Aspekte des Exports und Imports können wie bereits beschrieben genutzt werden (Anfrage, discard, etc.).
Insbesondere betrifft das die Vorgehensweise, falls eine (automatische) Abbildung nicht möglich ist, weil z.B. eine neue personalisierbare Funktion im Zielfahrzeug vorhanden ist oder weil z.B. eine im Quellfahrzeug vorhandene personalisierbare Funktion im Zielfahrzeug fehlt.

Die Alternative 2 kann auch ergänzend zur Alternative 1 vorgesehen werden, d.h. beide Alternativen können zusammen als eine Variante der automatischen Anpassung für einzelne Personalisierungsdaten umgesetzt werden.

### Sicherheitsanforderungen beim Austausch von Personalisierungsdaten:

Die Sicherheitsanforderungen beim Austausch von Personalisierungsdaten umfassen erstens, dass die Vertraulichkeit dieser Daten gewährleistet ist, zweitens, dass sie nicht von Unberechtigten manipuliert werden können, und drittens die Überprüfung der Berechtigung des Fahrzeugnutzers (Authentisierung).

Zur Definition der oben eingeführten Funktionen *exp-secure* und *imp-secure,* die die Sicherheitsanforderungen beim Export/Import umsetzen, werden folgende Unterfunktionen benutzt. Funktionen *enc(key,data)* und *dec(key,data)* ver-/entschlüsseln Daten *data* mit dem angegebenen Schlüssel key. Die Funktion *auth-check* prüft die Authentisierung. Sie kann z.B. in einer PIN-Eingabe (PIN = Personal Identification Number) bestehen. Eine Funktion *sig-make (key, data*) signiert *data* mit key und liefert die Daten mit Signatur zurück. Eine Funktion *sig-check(key,data)* überprüft die Signatur von *data* mit *key* und gibt die Daten ohne Signatur zurück. Scheitert die Signaturprüfung, so wird eine *Exception* ausgegeben.

Der folgende Pseudo-Code definiert die Funktion *exp-secure(x)*:

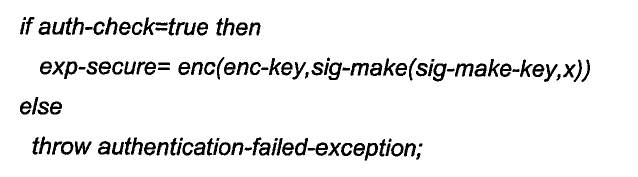

Der folgende Pseudo-Code definiert die Funktion *imp-secure(y):*

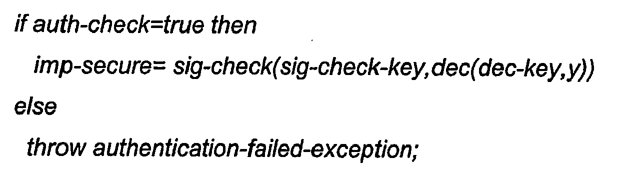

Durch die Kombination mit dem o.g. allgemeinen Export-/Import-Algorithmus ist die Authentisierung spezifisch für jedes Personalisierungsdatum. Alternativ kann die Authentisierung auch vor den Beginn des Export-/Imports gezogen werden, so dass nur ein Authentisierungsvorgang nötig ist. Darüber hinaus können, wie oben angesprochen, Personalisierungsdaten gruppiert werden, so dass ebenfalls eine "grobgranularere" bzw. zusammengefasste Authentisierung erreicht wird (analog zur bereits oben angesprochenen Verschlüsselung von Gruppen von Personalisierungsdaten).

Zur konkreten Realisierung existiert eine Vielzahl von Alternativen. Im Folgenden werden zwei konkrete Beispiele beschrieben.

### Beispiel 1: Asymmetrisches Verfahren und Public-Key-Infrastruktur:

Als Verfahren kann hier z.B. RSA eingesetzt werden. In diesem Fall erfolgt die Signatur mit dem "Private-Key" der exportierenden Entität (Fahrzeug oder Benutzer), die Verschlüsselung erfolgt mit dem "Public-Key" der Ziel-Entität (anderes Fahrzeug oder Benutzer).

Die Entschlüsselung erfolgt bei der Ziel-Entität mit dem "Private-Key" der Entität. Die Signaturprüfung erfolgt mit dem öffentlichen Schlüssel der Quell-Entität.
Der Schlüsselaustausch zwischen Quell-. und Ziel-Entität erfolgt über eine Public-Key-Infrastruktur. Diese muss sowohl für die Quell- als auch für die Ziel-Entität über eine online Verbindung erreichbar sein.

### Beispiel 2: Globale Schlüssel

Als Verfahren werden hier ein symmetrisches Verfahren zur Ver- und Entschlüsselung, z.B. DES, sowie ein asymmetrisches Verfahren für digitale Signaturen, z.B. RSA, eingesetzt. Quell- und Ziel-Entitäten sind Fahrzeuge. Alle Fahrzeuge besitzen den gleichen symmetrischen Schlüssel *sym-key* für das symmetrische Verfahren und das gleiche Paar *pub-key,priv-key* für das asymmetrische Verfahren.

Beim Export wird das Personalisierungsdatum mit *priv-key* signiert (RSA) und mit *sym-key* verschlüsselt (DES). Beim Import wird das entsprechende Datum mit *sym-*key entschlüsselt (DES) und die Signatur wird mit *pub-key* überprüft (RSA).
Nachteil dieses Verfahrens ist die eingeschränkte Sicherheit durch global gleiche Schlüssel. Vorteil ist dass zum Datenaustausch keine Online-Verbindung, auch nicht beim ersten mal, wie beim Beispiel 1, nötig ist.

In beiden. Beispielen kann die Authentisierung durch Eingabe einer PIN durch den Benutzer stattfinden.

Zur Speicherung von Schlüsseln, wie insbesondere im zweiten Beispiel, kann eine Smart Card eingesetzt werden. In diesem Fall erfolgt die Authentisierung gegenüber der Karte, z.B. durch PIN-Eingabe, und sämtliche Krypto-Algorithmen werden auf der Karte ausgeführt, so dass die Schlüssel die Karte nicht verlassen.

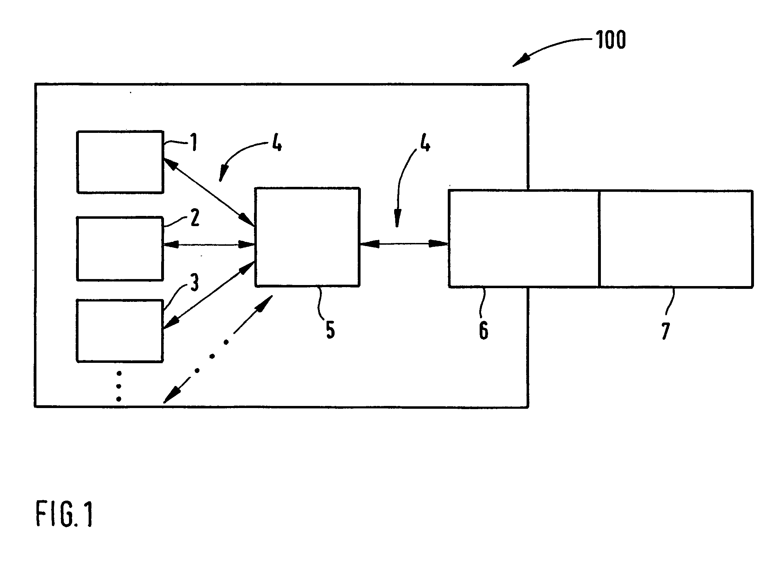

Im Folgenden werden Möglichkeiten zum Austausch der Personalisierungsdaten zwischen Fahrzeugen anhand von Fig. 1 näher beschrieben.

Im Fahrzeug 100 befinden sich personalisierte bzw. personalisierbare Funktionen 1, 2, 3 usw., deren Personalisierungsdaten mit einem anderen Fahrzeug auszutauschen sind. Bei den personalisierten Funktionen handelt es sich insbesondere um Komfortfunktionen, Audiofunktionen, Informationsfunktionen, Dienstefunktionen oder um geeignete Kombinationen dieser Funktionen.

Die personalisierten Funktionen bzw. deren Personalisierungsdaten werden über ein im Fahrzeug vorgesehenes Bussystem 4 von einer Koordinations-Einrichtung 5 aufgerufen und in der beschriebenen Weise zur Übertragung in das andere Fahrzeug portiert. Die portierten Personalisierungsdaten werden über den Daten-Bus 4 an ein Interface 6 zwischen Fahrzeug und "Außenwelt" weitergeleitet. Die portierten Personalisierungsdaten werden bei dem in Figur 1 dargestellten Ausführungsbeispiel von dem Interface 6 in einem Datenträger bzw. einem Speichermedium 7 gespeichert. Die in Figur 1 dargestellte Anordnung ist bei dem Zielfahrzeug ebenfalls vorgesehen (nicht dargestellt) und die dem Zielfahrzeug über den Datenträger bzw. das Speichermedium 7 zugeführten, portierten Personalisierungsdaten werden in dem Zielfahrzeug bereitgestellt.

Die personalisierten Funktionen 1, 2, 3 usw. können bspw. durch eine Software-Applikation auf einer Computer- bzw. PC-Plattform und/oder durch Steuergeräte, die eine entsprechende Soft- und Hardware aufweisen, bereitgestellt werden.

Bei der Koordinations-Einrichtung 5 handelt es sich bevorzugt um eine zentral oder dezentral realisierte Software-Applikation im Fahrzeug.

Bei dem Interface 6 handelt es sich bevorzugt um eine Bluetooth-, WLAN- oder Mobilfunk-Schnittstelle, wie eine GSM-, UMTS- oder sonstige Schnittstelle.

Bei dem Datenträger bzw. Speichermedium 7 handelt es sich um eine Speicherkarte, ein PDA (Personal Digital Assistant), ein Handy, eine Internet-Plattform oder bevorzugt um einen Dienst des Fahrzeugherstellers, wie BMW Online.

### Weitere Vorteile der Erfindung:

Durch das vorgeschlagene Verfahren ist es möglich, dem Kunden auf Basis von vorab eingestellten Präferenzen (z.B. in einem alten Fahrzeug, zu Hause oder durch einen Dienstleister) letztlich weltweit ein personalisiertes Fahrzeug anzubieten, das seinen Komfortansprüchen und Neigungen entspricht.

Dadurch kann der Nutzer direkt ohne aufwendige Voreinstellungen sein Hauptziel, "Fahren" vornehmen. Es entfällt für ihn der zeitaufwendige Einstellprozess im (anderen) Fahrzeug, was von besonderem Vorteil ist, wenn er sein Fahrzeug häufig wechselt. Dies trägt heute und insbesondere zukünftig, wenn immer mehr Funktionen im Fahrzeug einzustellen sind, zur Erhöhung des Kundennutzens bei. Gleichzeitig erhöht es die Sicherheit beim Fahren, da der Fahrer weniger abgelenkt ist.

Vorteilhaft ist auch, dass das o.g. Verfahren so skalierbar und flexibel angelegt ist, dass bei Funktionserweiterung einiger oder aller Fahrzeugmodelle, die zum Kreis der potentiellen Fahrzeuge für die Portierung gehören, dies sehr einfach möglich ist, da die Profilinformation nur entsprechend ergänzt wird und somit vermieden wird, dass bereits beim Export eine Konvertierung auf das Zielfahrzeugmodell stattfinden muss.

## Patentansprüche

1. Verfahren zur Übertragung mindestens einer ersten personenbezogenen Einstellung eines ersten Fahrzeugs in ein zweites Fahrzeug, insbesondere für einen das Fahrzeug wechseluden Fahrer, wobei
- die die personenbezogene erste Einstellung angebenden ersten Personalisierungsdaten in einem ersten Schritt in ursprünglicher oder modifizierter Form aus dem ersten Fahrzeug exportiert werden, wobei die ersten Personalisierungsdaten mit einer Information zur weiteren Behandlung beim Import in das zweite Fahrzeug versehen bzw. attributiert sind, und
- in einem zweiten Schritt in das zweite Fahrzeug importiert und auf der Basis der importierten Daten zweite Personalisierungsdaten gebildet werden und mit den zweiten Personalisierungsdaten eine personenbezogene Einstellung im zweiten Fahrzeug vorgenommen wird, wobei der Typ und/oder die Ausstattung des ersten und zweiten Fahrzeugs identisch oder unterschiedlich ist,
**dadurch gekennzeichnet, dass**
- die ersten Personalisierungsdaten aus dem ersten Fahrzeug in einer Form exportiert werden, die den Typ des ersten Fahrzeugs erkennen lässt und im zweiten Fahrzeug unter Verwendung dieser Daten die personenbezogenen Einstellungen vorgenommen werden, und
- die in ursprünglicher oder modifizierter Form aus dem ersten Fahrzeug exportierten Personalisierungsdaten und/oder die in ein fahrzeugunabhängiges Datenformat konvertierten ersten Personalisierungsdaten aufgeteilt, in verschiedene Gruppen entsprechend dem Grad der Schutzanforderungen eingeteilt und eine oder mehrere Gruppen von Daten mit höheren Schutzanforderungen verschlüsselt und/oder signiert werden, wobei vorzugsweise eine Verschlüsselung und Signatur mit einem Public-Key-Verfahren durchgeführt wird.

2. Verfahren nach Anspruch 1, ***dadurch gekennzeichnet,* dass** die ersten Personalisierungsdaten in ein fahrzeugunabhängiges Datenformat konvertiert werden und im zweiten Fahrzeug unter Verwendung der Daten im fahrzeugunabhängigen Datenformat die personenbezogenen Einstellungen vorgenommen werden.

3. Verfahren nach einem der vorstehenden Ansprüche, ***dadurch gekennzeichnet,* dass** die ersten Personalisierungsdaten von mindestens einem ersten Steuergerät des ersten Fahrzeugs und/oder von einer im ersten Fahrzeug vorgesehenen ersten zentralen Datenbank vor deren Export abgerufen und die zweiten Personalisierungsdaten, die auf der Basis der ersten Personalisierungsdaten gebildet worden sind, mindestens einem zweiten Steuergerät des zweiten Fahrzeugs und/oder einer im zweiten Fahrzeug vorgesehenen zweiten zentralen Datenbank zugeführt werden bzw. wird.

4. Verfahren nach einem der vorstehenden Ansprüche, ***dadurch gekennzeichnet,* dass** die zweiten Personalisierungsdaten aus den ersten Personalisierungsdaten unter Verwendung einer Tabelle, einer Matrix oder einer anderen Zuordnungsvorschrift gebildet werden, insbesondere eine Tabelle, die die ggf. unterschiedlichen Fahrzeugtypen berücksichtigt.

5. Verfahren nach einem der vorstehenden Ansprüche, ***dadurch gekennzeichnet,* dass** die ersten Personalisierungsdaten mit weiteren Personalisierungsdaten zu einer Gruppe zusammengefasst und gemeinsam verschlüsselt und/oder signiert werden.

6. System zur Übertragung mindestens einer ersten personenbezogenen Einstellung eines ersten Fahrzeugs in ein zweites Fahrzeug, insbesondere für einen das Fahrzeug wechseluden Fahrer, ***dadurch gekennzeichnet,* dass** das System ein Verfahren nach einem der vorstehenden Ansprüche ausführt.

7. Computer-Programm-Produkt zur Übertragung mindestens einer ersten personenbezogenen Einstellung eines ersten Fahrzeugs in ein zweites Fahrzeug, insbesondere für einen das Fahrzeug wechseluden Fahrer, ***dadurch gekennzeichnet,* dass** das Computer-Programm-Produkt ein Verfahren nach einem der vorstehenden Ansprüche 1 bis 5 ausführt.

## Claims

1. A method for transferring at least a first personal setting of a first vehicle to a second vehicle, more especially for a driver changing the vehicle, wherein
- the first personalisation data indicating the first personal setting are exported in a first step in original or modified form from the first vehicle, the first personalisation data being provided or attributed with information for further treatment on import into the second vehicle, and
- in a second step, are imported into the second vehicle, and on the basis of the imported data, second personalisation data are formed and using the second personalisation data, a personal setting is implemented in the second vehicle, the model and/or the equipment of the first and second vehicle being identical or different,
**characterised in that**
- the first personalisation data are exported from the first vehicle in a form which allows the model of the first vehicle to be recognised and, in the second vehicle, the personal settings are implemented using this data, and
- the personalisation data exported in original or modified form from the first vehicle and/or the first personalisation data converted into a vehicle-independent data format are divided and classified into various groups in accordance with the degree of protection requirements and one or more groups of data with higher protection requirements are encoded and/or signed, an encoding and signature preferably being carried out with a public key method.

2. A method according to claim 1, **characterised in that** the first personalisation data are converted into a vehicle-independent data format and the personal settings are implemented in the second vehicle using the data in the vehicle-independent data format.

3. A method according to any one of the preceding claims, **characterised in that** the first personalisation data are retrieved from at least a first control unit of the first vehicle and/or from a first central database provided in the first vehicle before the export thereof and the second personalisation data, which were formed on the basis of the first personalisation data are supplied to at least a second control unit of the second vehicle and/or a second central database provided in the second vehicle.

4. A method according to any one of the preceding claims, **characterised in that** the second personalisation data are formed from the first personalisation data using a table, a matrix or another allocation specification, more especially a table, which takes into account optionally different vehicle models.

5. A method according to any one of the preceding claims, **characterised in that** the first personalisation data are combined with further personalisation data to form a group and encoded and/or signed together.

6. A system for transferring at least a first personal setting of a first vehicle to a second vehicle, more especially for a driver changing the vehicle, **characterised in that** the system carries out a method according to any one of the preceding claims.

7. A computer programme product for transferring at least a first personal setting of a first vehicle to a second vehicle, more especially for a driver changing the vehicle, **characterised in that** the computer programme product carries out a method according to any one of the preceding claims 1 to 5.

## Revendications

1. Procédé pour transmettre au moins un premier réglage, relatif à la personne, d'un premier véhicule à un second véhicule, notamment à destination d'un conducteur changeant de véhicule, selon lequel
- les premières données de personnalisation indiquant le premier réglage relatif à la personne sont, dans une première étape, exportées du premier véhicule dans sa forme originale ou dans une forme modifiée, ces premières données présentant ou recevant en attribution une information pour le traitement ultérieur lors de l'importation dans le second véhicule,
- dans une seconde étape, on importe dans le second véhicule des données sur la base desquelles sont formées des secondes données de personnalisation permettant d'effectuer dans le second véhicule un réglage relatif à la personne, le type et/ou la constitution du premier et du second véhicule étant identiques ou différentes,
**caractérisé en ce que**
- les premières données de personnalisation sont exportées du premier véhicule sous une forme permettant de reconnaître le type du premier véhicule et, dans le second véhicule, on effectue les réglages relatifs à la personne en utilisant ces données,
- les données de personnalisation exportées du premier véhicule sous leur forme originale ou sous une forme modifiée et/ ou les premières données de personnalisation converties dans un format de données indépendant du véhicule, sont réparties en différents groupes correspondant aux degrés des exigences de sécurité, et un ou plusieurs groupes de données dont les exigences de sécurité sont assez élevées sont codés et/ ou signés, le codage et la signature étant effectués de préférence par un procédé public-key.

2. Procédé selon la revendication 1,
**caractérisé en ce que**
les premières données de personnalisation sont converties en un format de données indépendant du véhicule et, dans le second véhicule, en utilisant ces données dans le format indépendant du véhicule, on effectue les réglages relatifs à la personne.

3. Procédé selon la revendication 1 ou 2,
**caractérisé en ce que**
les premières données de personnalisation sont, avant d'être exportées, appelées par au moins un premier appareil de commande du premier véhicule et/ou par une première banque centrale de données prévue dans le premier véhicule, et les secondes données de personnalisation qui ont été formées sur la base des premières données de personnalisation, sont envoyées au moins à un second appareil de commande du second véhicule et/ou à une seconde banque centrale prévue dans le second véhicule.

4. Procédé selon l'une des revendications précédentes,
**caractérisé en ce que**
les secondes données de personnalisation sont formées à partir d'une première liste, d'une matrice ou d'un autre document d'affectation, en particulier une liste qui prend éventuellement en compte les différents types de véhicule.

5. Procédé selon l'une des revendications précédentes,
**caractérisé en ce que**
les premières données de personnalisation sont réunies avec d'autres données de personnalisation en un groupe et elles sont codées et/ou signées en commun.

6. Système pour transmettre au moins un réglage relatif à la personnes d'un premier véhicule à un second véhicule, notamment à destination d'un conducteur qui change de véhicule,
**caractérisé en ce que**
le système met en application un procédé selon une des revendications précédentes.

7. Programme d'ordinateur pour transmettre au moins un réglage relatif à la personne, d'un premier véhicule à un second véhicule, notamment à destination d'un conducteur qui change de véhicule,
**caractérisé en ce que**
ce programme met en application un procédé selon une des revendications 1 à 5.
